# EUROPEAN PATENT APPLICATION

(11) **EP 1 020 380 A1**
(43) Date of publication of application: **19.07.2000**
(21) Application number: 00200069.3
(22) Date of filing: 07.01.2000
(51) Int. Cl.: B65G 47/51, B65G 47/82, B65G 47/71

(54) **Separating device**

(30) Priority: 11.01.1999 NL 1010989
(71) Applicant: EBM TECHNIEK B.V., 3925 CK Scherpenzeel (NL)
(72) Inventor: Neutel, Ronald Walter, 3822 TD Amersfoort (NL); De Gooyer, Gerrit, 3905 MG Veenendaal (NL); Rijksen, Rijk, 8075 PH Elspeet (NL); Scholten, Gerrit Jan, 6991 ZT Rheden (NL)
(74) Representative: Prins, Hendrik Willem

(57) **Abstract**

The invention relates to a device for separating a supply flow of successively placed products (3) supplied by a conveyor into first and second discharge flows (B and C) of successively placed products (3) to be discharged by the conveyor, which device comprises:
- detection means (4) for detecting a product in the supply flow;
- a number of at least partially ferromagnetic positioning elements (5) which are drivable parallel to and at substantially the same speed as the conveyor and are slidable transversely of the transporting direction from a rest position to an extended position;
- separating means (13) placed downstream of the detection means for optionally either holding an individual positioning element in the rest position or for beginning a sliding movement of an individual positioning element from the rest position to the extended position in response to the detection means;
- first magnet (11) means for holding a positioning element in the rest position such that a supplied product enters the first discharge flow;
- second magnet (12) means for continuing the sliding movement of a positioning element from the rest position to the extended position such that the positioning element displaces a supplied product into the second discharge flow, wherein the choice is made such that the flow rate of each of the discharge flows lies below a predetermined value.

## Description

The invention relates to a device for separating a supply flow of successively placed products supplied by a conveyor into first and second discharge flows of successively placed products to be discharged by the conveyor.

Products packed by means of the so-called "flow wrap" principle leave the machine at very high speed. Unpacked products or boxes can also be fed at high speed. Known machines for placing these products into boxes are not able to process the products at such a high speed. For this purpose the flow of products, which comes for instance from a flow wrap machine, must be separated into a number of flows so that the processing speed of each flow can be considerably lower.

Separating machines are known wherein products are knocked out of the supply flow by means of an air jet or by means of mechanical knock-out means. The drawback hereof is that a short but great force is exerted on the products, whereby the product can be damaged or whereby the product deviates from its line so that separation is no longer possible. Such separating devices are moreover limited to a determined maximum speed of the supply flow due to limitations in the switching speed of the knock-out means, since otherwise the machine can become jammed.

The above stated drawbacks are prevented with a device according to the invention, which device comprises:
- detection means for detecting a product in the supply flow;
- a number of at least partially ferromagnetic positioning elements which are drivable parallel to and at substantially the same speed as the conveyor and are slidable transversely of the transporting direction from a rest position to an extended position;
- separating means placed downstream of the detection means for optionally either holding an individual positioning element in the rest position or for beginning a sliding movement of an individual positioning element from the rest position to the extended position in response to the detection means;
- first magnet means for holding a positioning element in the rest position such that a supplied product enters the first discharge flow;
- second magnet means for continuing the sliding movement of a positioning element from the rest position to the extended position such that the positioning element displaces a supplied product into the second discharge flow, wherein the choice is made such that the flow rate of each of the discharge flows lies below a predetermined value. This predetermined value depends among other factors on the supply rate and the processing speed of the machines processing the discharge flows. The value is preferably determined periodically.

Using the separating means the sliding movement of the positioning elements is started off, whereafter magnet means complete the sliding movement. The separating means are hereby only involved in a part of the sliding movement of each positioning element, whereby the time the separating means require per positioning element can be reduced considerably. In view of the shorter switching time the processing speed of the separating device can be considerably higher.

A preferred embodiment of the invention comprises:
- two drivable endless chains running mutually parallel;
- a number of connecting pieces arranged between two mutually opposite links of the chains;
   wherein the positioning elements are arranged slidably relative to the connecting pieces.

Coupling of the drivable chains to the drive of the conveyor enables displacement of the positioning elements at the same speed as the products.

In another embodiment of the invention the positioning elements comprise a general L-shape with a long and a short leg, wherein the long leg of a positioning element extends in the sliding direction and the short leg lies at right angles to the transporting direction.

In a preferred embodiment the short leg of each of the positioning elements comprises a ferromagnetic part and the separating means engage hereon.

An advantage is that the positioning elements protrude with the short leg out of the transporting device for the positioning elements which is formed by the two parallel chains. The separating means can hereby engage in simple manner on the positioning elements.

The separating means can be operated by a servomotor, a pneumatic cylinder or by an anchor attractable by an electromagnet, wherein reset means are present for carrying the anchor out of the attracted position to a rest position.

The above stated controls can be applied subject to the desired speed and the switching characteristic of the separating means.

In yet another embodiment according to the invention the device comprises guide means for returning the positioning elements from the extended position to the rest position.

In a preferred embodiment of the invention there is provided an assembly of a number of devices according to the invention placed downstream one after another such that a discharge flow of the preceding device is the supply flow of a following device.

It is often desired to separate the supply flow of successively placed products into more than two flows. This can take place in simple manner by placing a number of devices according to the invention one after another.

It may be advantageous herein for the positioning elements to be common to at least two devices.

By embodying a device according to the invention such that two or more positioning elements can engage on a product, it is possible to place the products in a fixed orientation by means of these positioning elements.

It is further possible to rotate a product substantially 90° by having a positioning element engage at a suitable position on this product.

These and other features are further elucidated with reference to the annexed drawings:
figure 1 shows a top view of a first embodiment of the invention;
figure 2 shows a partly perspective view of the device of figure 1;
figure 3 shows a partly schematic, perspective view of the device of figure 1;
figure 4 is a top view of an embodiment of an assembly according to the invention;
figure 5 shows a third embodiment of the invention.

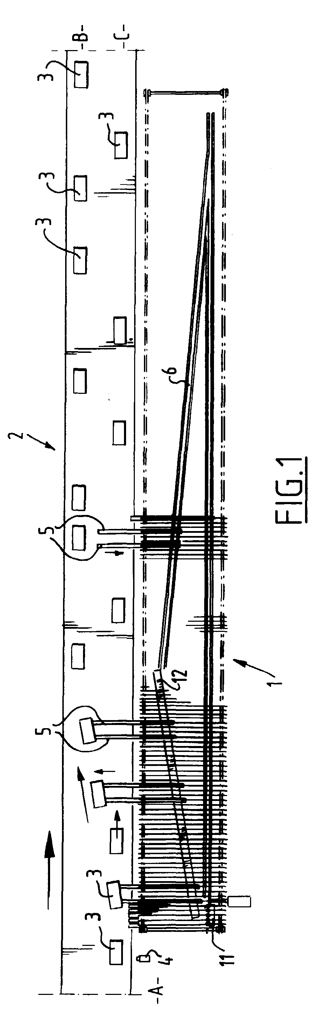

Figure 1 shows an embodiment 1 according to the invention which is placed adjacently of a conveyor belt 2. Products 3 are supplied over conveyor belt 2 in flow A. Products 3 are detected by means of a detector 4 and optionally displaced by device 1 so that a first and a second flow (B respectively C) are created. Products 3 which have to be displaced to discharge flow B are pushed out of supply flow A to discharge flow B by positioning elements 5.

Once the supplied products 3 have been separated into flows B and C, the extended positioning elements 5 are moved back again to a rest position by means of guide means 6.

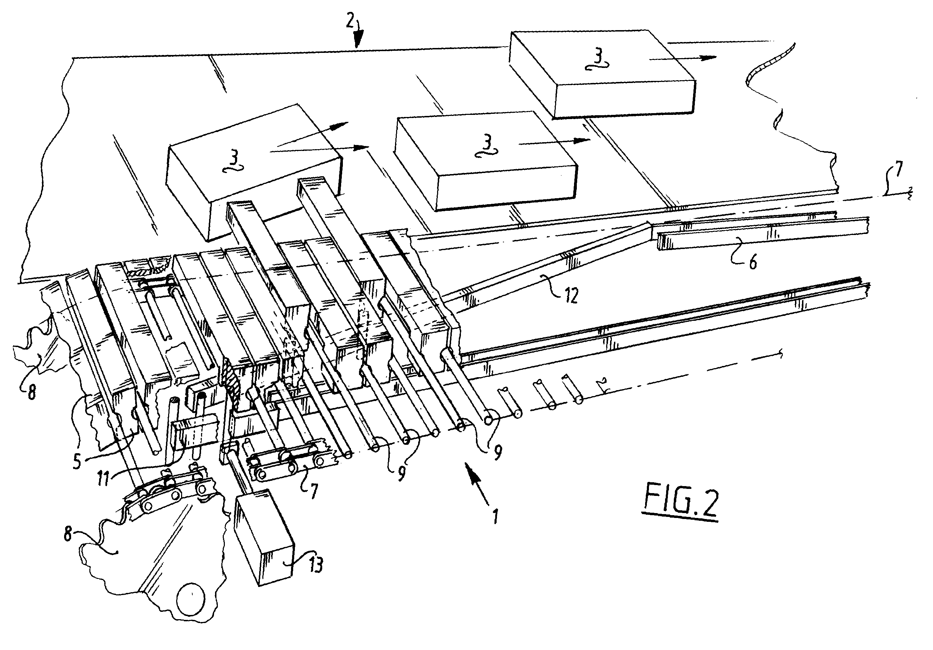

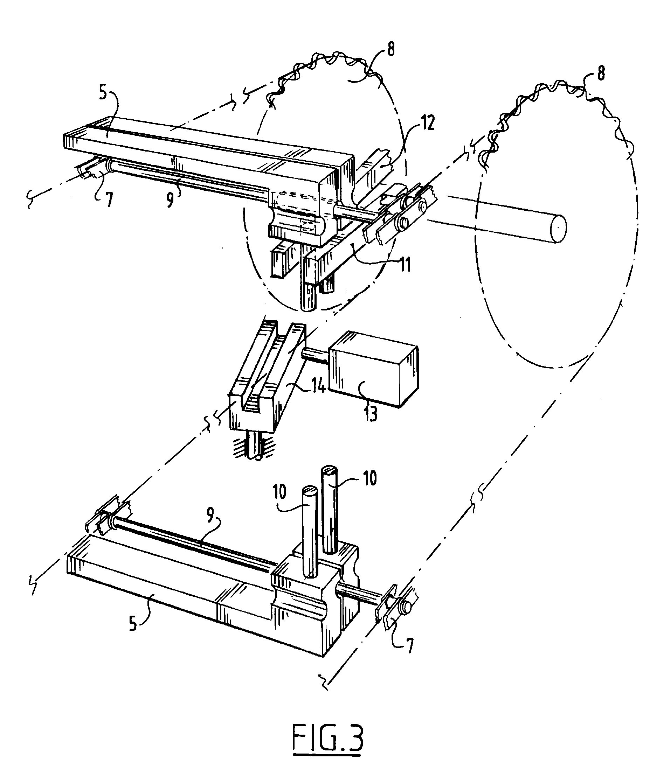

Figure 2 shows a partly perspective view of the device 1 shown in figure 1, wherein the part is shown where positioning elements 5 are carried to an extended position. Device 1 comprises two endless chains 7 which are guided drivably over chain wheels 8. Both chains 7 are mutually connected by means of a large number of connecting pins 9. Positioning elements 5 are guided slidably transversely of the transporting direction by these connecting pieces 9. Positioning elements 5 have a general L-shape, wherein the short leg comprises a ferromagnetic part 10 (see figure 3).

A first magnet 11 and a second magnet 12 are arranged between the transporting device for positioning elements 5 formed by chains 7, chain wheels 8 and connecting pins 9. Positioning elements 5 are supplied in a rest position and transported with their ferromagnetic part 10 between the first and second magnet. Because the first and second magnet are placed opposite each other, a magnetic field is created between the magnets, wherein the spheres of influence of the two magnets are precisely separated. When ferromagnetic part 10 is transported exactly to the separation between the magnets, only a very small displacement is necessary to cause the ferromagnetic part to be attracted by either the first or the second magnet. This displacement can be applied by an impact from separating means 13, as shown in figure 2.

It is also possible to have ferromagnetic part 10 guided by a U-shaped guide element 14 which is operated by separating means 13. The separating means can hereby remain in one position when a number of elements 5 have to be placed in an extended position. This enhances the switching time, whereby the separating speed can increase.

When the ferromagnetic part is attracted by the first magnet, the relevant positioning element will remain in the rest position. When separating means 13 deliver an impact to the positioning element such that the ferromagnetic part moves within the attractive force of the second magnet 12, the positioning element 5 in question will then be extended as a result of the angled placing of second magnet 12. A product 3 is hereby displaced relatively smoothly from the supply flow to discharge flow B.

Once positioning elements 5 have reached the fully extended position, positioning elements 5 are gradually returned to their rest position by guide means 6.

Figure 2 shows that second magnet 12 brings about the whole sliding movement of positioning elements 5. It is however possible for the second magnet means 12 to transpose into guide means before the positioning elements 5 have reached their fully extended position.

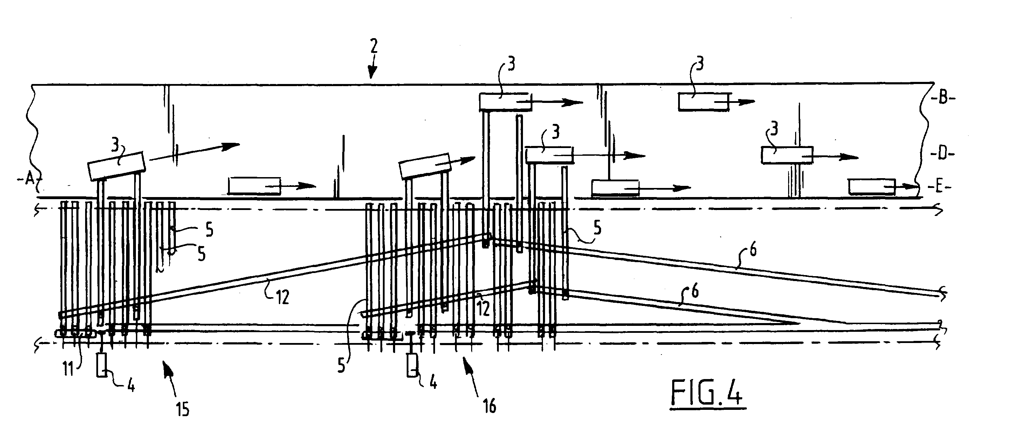

Figure 4 shows a second embodiment of the invention. Two devices 15, 16 according to the invention are herein placed downstream one after the other along a conveyor belt 2. The first device 15 separates the supply flow A of supplied products 3 into a discharge flow B and a discharge flow C. Device 16 then separates the flow C coming from device 15 into a discharge flow D and a discharge flow E.

As shown in figure 4, positioning elements 5 are common to both devices 15 and 16. It is of course also possible to place two devices as shown in figure 1 one after the other.

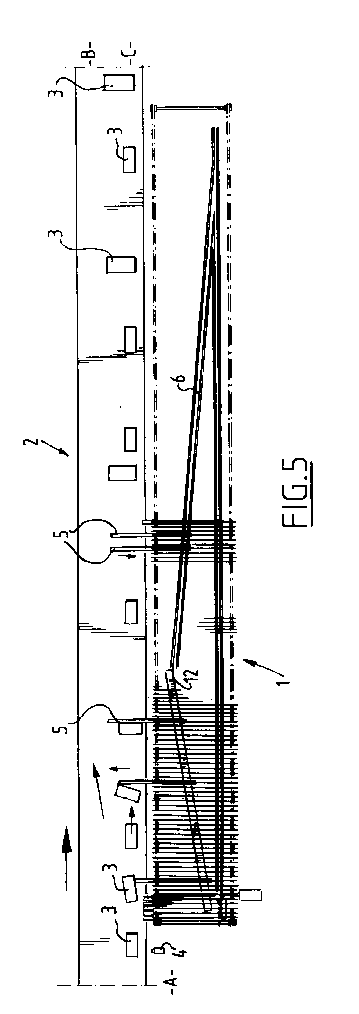

Figure 5 shows a third embodiment of the invention. Separating device 1 according to the invention is herein used to position products 3. By causing a positioning element 5, which is carried to an extended position, to engage at a suitable point on the product, the product will rotate. In a preferred embodiment the conveyor belt 2 has a slightly lower speed than the separating device, whereby the products come to lie against the extended elements.

With this device products from a flow of products can be positioned at high speed in two positions. In the shown embodiment the positions differ 90° from each other. Other positions can however also be obtained with a suitable form of the positioning elements.

## Claims

1. Device for separating a supply flow of successively placed products supplied by a conveyor into first and second discharge flows of successively placed products to be discharged by the conveyor, which device comprises:
- detection means for detecting a product in the supply flow;
- a number of at least partially ferromagnetic positioning elements which are drivable parallel to and at substantially the same speed as the conveyor and are slidable transversely of the transporting direction from a rest position to an extended position;
- separating means placed downstream of the detection means for optionally either holding an individual positioning element in the rest position or for beginning a sliding movement of an individual positioning element from the rest position to the extended position in response to the detection means;
- first magnet means for holding a positioning element in the rest position such that a supplied product enters the first discharge flow;
- second magnet means for continuing the sliding movement of a positioning element from the rest position to the extended position such that the positioning element displaces a supplied product into the second discharge flow, wherein the choice is made such that the flow rate of each of the discharge flows lies below a predetermined value.

2. Device as claimed in claim 1, which device comprises:
- two drivable endless chains running mutually parallel;
- a number of connecting pieces arranged between two mutually opposite links of the chains;
wherein the positioning elements are arranged slidably relative to the connecting pieces.

3. Device as claimed in claim 1, wherein the positioning elements comprise a general L-shape with a long and a short leg, wherein the long leg of a positioning element extends in the sliding direction and the short leg lies at right angles to the transporting direction.

4. Device as claimed in claim 3, wherein the short leg of each of the positioning elements comprises a ferromagnetic part and the separating means engage hereon.

5. Device as claimed in claim 1, wherein the separating means can be operated by a servomotor.

6. Device as claimed in claim 1, wherein the separating means can be operated by a pneumatic cylinder.

7. Device as claimed in claim 1, wherein the separating means can be operated by an anchor attractable by an electromagnet, wherein reset means are present for carrying the anchor out of the attracted position to a rest position.

8. Device as claimed in claim 1, which device comprises guide means for returning the positioning elements from the extended position to the rest position.

9. Assembly of a number of devices as claimed in claim 1 placed downstream one after another such that a discharge flow of one device is the supply flow of a following device.

10. Device as claimed in claim 8, wherein the positioning elements are common to at least two devices.

11. Device as claimed in claim 1, wherein the products can be oriented with the positioning elements.

12. Device as claimed in claim 11, wherein the products can be rotated 90°.

13. Device as claimed in claim 1, wherein the predetermined value depends on the flow rate of the supply flow and the desired flow rates of the discharge flows.
